(19) Europäisches Patentamt
European Patent Office
Office européen des brevets

(11) Numéro de publication: **0 126 746**
**B1**

(12) **FASCICULE DE BREVET EUROPEEN**

(45) Date de publication du fascicule du brevet: **07.01.88**

(51) Int. Cl.⁴: **C 01 G 43/01**

(21) Numéro de dépôt: **83903799.1**

(22) Date de dépôt: **29.11.83**

(86) Numéro de dépôt international: **PCT/FR 83/00239**

(87) Numéro de publication internationale: **WO 84/02124 (07.06.84 Gazette 84/14)**

# (54) PROCEDE D'OBTENTION DE UO 3? DE GRANDE REACTIVITE PAR DECOMPOSITION THERMIQUE SOUS FORME SOLIDE DE NITRATE D'URANYLE HYDRATE.

(30) Priorité: **30.11.82 FR 8220355**

(43) Date de publication de la demande: **05.12.84 Bulletin 84/49**

(45) Mention de la délivrance du brevet: **07.01.88 Bulletin 88/1**

(84) Etats contractants désignés: **AT BE CH DE GB LI NL SE**

(56) Documents cités:
**FR - A - 1 303 477**
**FR - A - 2 370 695**
**FR - A - 2 526 006**
**GB - A - 1 054 783**
**US - A - 2 981 592**
**US - A - 3 355 393**

**Le dossier contient des informations techniques présentées postérieurement au dépôt de la demande et ne figurant pas dans le présent fascicule.**

(73) Titulaire: **COMURHEX Société pour la Conversion de l'Uranium en Métal et Hexafluorure, Tour Manhattan La Défense 2 6, place de l'Iris, F-92400 Courbevoie (FR)**

(72) Inventeur: **BACHELARD, Roland, 99, grande rue de la Guillotière, F-69007 Lyon (FR)**
Inventeur: **LAKODEY, Pierre, 5, impasse Berthelot, F-69800 Saint-Priest (FR)**

(74) Mandataire: **Séraphin, Léon et al, PECHINEY 28, rue de Bonnel, F-69433 Lyon Cedex 3 (FR)**

**EP 0 126 746 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé d'obtention de trioxyde d'uranium de grande réactivité par dénitration thermique sous une forme solide de nitrates d'uranyle hydratés, de formule $UO_2(NO_3)_2, xH_2O$ avec $2 \leq x \leq 6$.

A travers l'expression «grande réactivité», la demanderesse entend définir les aptitudes améliorées à la réduction de $UO_3$ en $UO_2$ et à l'hydrofluoruration de l'$UO_2$ en $UF_4$, aptitudes qui sont corrélativement liées à une grande surface spécifique et à une porosité élevée de l'$UO_3$ résultant de la dénitration, la structure du produit obtenu pouvant être mise en évidence d'une manière simple, notamment par la détermination de sa densité apparente.

Il est bien connu que la production du trioxyde d'uranium ($UO_3$) par dénitration thermique du nitrate d'uranyle hexahydraté selon la réaction:

$$UO_2(NO_3)_2, 6H_2O \rightarrow UO_3 + 2NO_2 + \frac{1}{2} O_2 + 6H_2O$$

est une étape importante dans les procédés de production de l'hexafluorure d'uranium comportant la réduction de trioxyde d'uranium en dioxyde d'uranium, la fluoruration du dioxyde d'uranium par l'acide fluorhydrique et, enfin, l'action du fluor sur le tétrafluorure d'uranium conduisant à l'hexafluorure d'uranium souhaité. Mais, il est également bien connu que l'$UO_2$ obtenu par dénitration thermique puis réduction, offre une faible productivité par manque de réactivité à l'égard de l'acide fluorhydrique, lors de sa transformation en $UF_4$.

De nombreux procédés d'obtention du trioxyde d'uranium ont déjà été décrits dans la littérature spécialisée. C'est ainsi que le document «Uranium Production Technology» édité par Charles D. Harrington and Archie E. Ruehle, New-York, Edition 1959, pages 181 à 191, cite plusieurs procédés de dénitration thermique du nitrate d'uranyle hexahydraté.

Un premier procédé, de type discontinu, consiste à traiter thermiquement une solution concentrée de nitrate d'uranyle hexahydraté et maintenue sous agitation, d'abord à une température contrôlée de 621°C des gaz de combustion pendant une heure et demie, puis à une température de 510°C de ces gaz pendant cinq heures et, enfin, à refroidir le produit pulvérulent obtenu pendant une demi-heure environ.

Toutefois, comme l'auteur l'exprime lui-même, ce procédé présente certains inconvénients qui en limitent son développement. En effet, le produit pulvérulent obtenu est, en fait, constitué par un mélange de $UO_3$ et de $U_3O_8$, ce deuxième oxyde se formant sur les parois du réacteur portées à une température plus élevée que celle qui règne à l'intérieur dudit réacteur. De plus, si la température de dénitration est trop forte, elle peut conduire à la prise en masse du mélange d'oxydes précités, tandis que, si la température de dénitration est trop faible, le mélange d'oxydes contient encore du nitrate d'uranyle et de l'eau. Enfin, dans le cas le plus favorable, c'est-à-dire dans le cas où le produit pulvérulent obtenu est de l'$UO_3$, ultérieurement réduit en $UO_2$, ce dernier offre une faible capacité à se combiner avec HF lors de l'étape de fluoruration dudit oxyde. Cette faible capacité de l'$UO_2$ à réagir avec HF, qui mesure en fait le manque de réactivité du produit, est considérée par l'auteur lui-même comme la conséquence de la faible surface spécifique du trioxyde d'uranium obtenu (0,73 $m^2/g$), mais est également la conséquence de la faible porosité de l'$UO_3$ obtenu, mise en évidence par la détermination de la densité apparente, qui, dans ce cas, est de l'ordre de 4 grammes par $cm^3$.

Pour améliorer cette réactivité du dioxyde d'uranium, l'auteur préconise d'utiliser certains artifices tels que, par exemple, l'introduction d'acide sulfurique dans la solution de nitrate d'uranyle soumise à la dénitration thermique. Mais, ces artifices se révèlent d'une efficacité limitée puisque l'$UO_3$ produit présente une surface spécifique ne dépassant pas 2 $m^2.g^{-1}$.

Un autre procédé, de type connu, consiste à décomposer thermiquement le nitrate d'uranyle hexahydraté par introduction d'une solution aqueuse le contenant dans un lit de trioxyde d'uranium pulvérulent maintenu à la température de dénitration et soumis à agitation. La décomposition thermique du nitrate d'uranyle en solution s'effectue dans un réacteur à auge, dont le fond est chauffé électriquement par contact direct entre la solution de nitrate d'uranyle et l'$UO_3$ pulvérulent chaud remplissant l'auge dudit réacteur, la température du milieu de dénitration étant maintenue entre 510°C et 538°C. Pour permettre le maintien sous agitation du lit de pulvérulent, le réacteur de dénitration est muni d'un agitateur à axe horizontal dont les bras, en forme de T, entretiennent le brassage dudit lit. Au fur et à mesure de sa formation, l'$UO_3$ est extrait du réacteur, tandis que les effluents gazeux sont captés et traités.

Bien que ce procédé offre l'avantage d'être de type continu, il présente des inconvénients similaires à ceux évoqués dans le cas du procédé discontinu précité de dénitration du nitrate d'uranyle hexahydraté. En effet, le produit pulvérulent obtenu peut être un mélange de $UO_3$ et $U_3O_8$ car ce deuxième oxyde peut se former sur les parois surchauffées du réacteur. De plus, si la température de dénitration n'est pas correctement maîtrisée, elle peut provoquer la prise en masse du mélange d'oxydes d'uranium si elle est trop élevée, ou encore, donner un mélange d'oxydes d'uranium contenant encore du nitrate d'uranyle et de l'eau, si elle est trop faible. Enfin, après que le produit pulvérulent obtenu selon ce procédé ait été réduit en dioxyde d'uranium, ce dernier offre une très faible réactivité à l'égard de l'acide fluorhydrique dans l'étape de fluoruration ultérieure, comme a pu le constater l'homme de l'art, faible réactivité liée à la faible surface spécifique B.E.T. (inférieure à 1 $m^2.g^{-1}$) et à la faible porosité de l'$UO_3$ produit par ledit procédé, porosité mesurée

par la densité apparente de l'ordre de 4 grammes par $cm^3$.

Il est également connu d'effectuer la dénitration thermique du nitrate d'uranyle hexahydraté en lit fluidisé. Un tel procédé est décrit dans la publication «The Termal denitration of uranyl nitrate in a fluidised bed reactor» de l'Australian Atomic Energy Commission - Juillet 1974 (ISBN 0-642-99645-8), pages 1 à 18. Ce procédé consiste à pulvériser une solution concentrée de nitrate d'uranyle dans un lit fluidisé (au moyen d'air ou de vapeur d'eau) de trioxyde d'uranium maintenu approximativement à la température de 270°C. L'$UO_3$ produit par la dénitration thermique se développe sur les particules granuleuses d'$UO_3$ initialement présente dans le lit fluidisé, ou encore forme de nouvelles particules granuleuses, mise à leur tour en état de fluidisation. Mais, le trioxyde d'uranium produit selon ce procédé, puis soumis à une réduction, conduit à un dioxyde d'uranium qui manifeste une faible réactivité lors de l'étape ultérieure de fluoruration. Cette faible réactivité apparaît être, encore une fois, la conséquence de la faible surface spécifique B.E.T. de l'$UO_3$ produit lors de la dénitration thermique, cette surface restant inférieure au $m^2.g^{-1}$, ainsi que de la faible porosité de ce même $UO_3$, porosité mesurée par la densité apparente qui est de l'orde de 4 grammes par $cm^3$.

Dès lors, pour augmenter la réactivité de l'$UO_3$ produit par la dénitration thermique du nitrate d'uranyle en lit fluidisé, les auteurs du procédé préconisent également l'introduction d'ions sulfates dans la solution de nitrate d'uranyle à traiter, comme la littérature spécialisée l'avait déjà recommandé, mais les résultats énoncés montrent que, dans ce cas, la surface spécifique B.E.T. de l'$UO_3$ produit ne peut dépasser 1,5 $m^2.g^{-1}$.

Enfin, dans le document US 3 355 393 il est décrit un procédé de fabrication de composés uranifères sous forme de microsphères rigoureusement sphériques.

La dernière étape de ce procédé consiste à chauffer ces particules solides, préalablement formées, à une température en dessous de leur point de fusion, précaution logique pour éviter leur destruction, de façon à éliminer le solvant et à les transformer en sel uranifère. Ce chauffage peut être effectué sous pression réduite ou à pression atmosphérique. Aucune indication n'est fournie sur les surfaces spécifiques obtenues étant donné que l'objet du procédé ne vise qu'à préserver l'aspect physique du produit. Par ailleurs, les exemples ne font référence qu'à des mélanges de sel d'U avec du C et/ou des oxydes métalliques.

Ainsi, tous ces procédés connus et décrits dans la littérature spécialisée, pour la production de trioxyde d'uranium par dénitration thermique de nitrate d'uranyle, conduisent à l'obtention d'$UO_3$ de faible surface spécifique ne dépassant pas 2 $m^2.g^{-1}$ et de porosité insuffisante qui, par réduction, procure un dioxyde d'uranium révélant une réactivité médiocre dans l'étape ultérieure de fluoruration, exigeant des installations industrielles de grande capacité, très coûteuses en raison de la faible cinétique de réaction et du médiocre rendement en découlant.

De plus, les procédés actuellement connus peuvent conduire à la production d'un mélange d'$UO_3$ et $U_3O_8$ qui, lors de l'étape de fluoruration, donne à son tour un mélange de $UF_4$ et $UO_2F_2$, dont il faut éliminer l'$UO_2F_2$ qui est une impureté gênante.

Il faut cependant signaler la demande de brevet EP 83 901 377 publiée le 02.05.1984 et qui en conséquence fait partie de l'état de la technique selon l'Article 54 (3) CBE où est décrit un procédé d'obtention de trioxyde d'uranium de grande surface spécifique à partir de nitrate d'uranyle hydraté sous forme liquide, par chauffage en 2 étapes, la première jusqu'à une température comprise entre 160 à 260°C pour obtenir un produit solide contenant au moins 55% d'uranium, qui est ensuite porté à une température d'au plus 600°C, alors que dans le procédé selon l'invention on part directement d'un nitrate d'uranyle hydraté sous forme solide.

Forte des inconvénients précités, la demanderesse, poursuivant ses recherches, a trouvé et mis au point un procédé de production du seul trioxyde d'uranium de forte réactivité, c'est-à-dire disposant d'une grande surface spécifique B.E.T. et d'une porosité élevée par dénitration thermique, conduisant, après réduction, à un dioxyde d'uranium lui-même très réactif à l'égard de l'agent de fluoruration avec lequel il se combine à vitesse élevée et avec un rendement maximal.

Le procédé selon l'invention d'obtention du trioxyde d'uranium de grande réactivité par dénitration thermique de nitrate d'uranyle hydraté de formule $UO_2(NO)_3, xH_2O$ dans laquelle x est compris dans l'intervalle $2 \leq x \leq 6$, consiste en ce que ledit nitrate d'uranyle est soumis sous sa forme solide à un traitement thermique consistant à le porter d'une température initiale toujours inférieure à sa température de fusion jusqu'à une température finale comprise entre 260°C et 600°C, en conduisant le traitement d'une manière telle que la température du produit à chaque instant soit toujours inférieure à la température de fusion correspondant à sa composition instantanée, caractérisé en ce que la pression partielle de vapeur d'eau dans l'enceinte du traitement soit au plus égale à 8,7 kPa (65 millimètres de mercure), en ce que la montée en température est progressive et continue, et que le traitement est effectué dans un appareil à circulation continue de produit.

Selon le procédé de l'invention, la dénitration thermique se déroule d'une manière telle que l'élimination de l'eau s'effectue sans que ledit nitrate atteigne le point de fusion attaché à sa composition instantanée et que la dénitration dudit nitrate se produise en l'absence de toute fusion.

Comme cela a déjà été exprimé, la température la plus haute sous laquelle est porté le nitrate d'uranyle sous forme solide est d'au moins 260°C.

Cette température finale peut être choisie dans l'intervalle 260°C à 600°C, et, préférentiellement, dans l'intervalle 300°C à 500°C.

La dénitration thermique, qui s'effectue sous une pression partielle de vapeur d'eau au plus égale à 8,7 kPa (65 millimètres de mercure), peut être conduite préférentiellement sous une pression partielle de vapeur d'eau au plus égale à 5,3 kPa (40 millimètres de mercure).

Le traitement de dénitration thermique se déroule généralement sous une pression totale au plus égale à la pression atmosphérique. Mais, cette pression peut être préférentiellement choisie au plus égale à 8,7 kPa (65 millimètres de mercure).

Lors de ses très nombreuses expérimentations, la demanderesse a constaté que la phase solide en cours de traitement devenait infusible avant d'avoir atteint la température finale de traitement. Dès lors que la phase solide est dans cet état, il est possible de pratiquer une élévation de température accélérée afin de réduire la durée du traitement de dénitration, la vitesse de montée en température de la phase solide infusible pouvant être choisie dans l'intervalle de 4°C par minute à 800°C par minute.

Le temps nécessaire à la réalisation du procédé selon l'invention, s'écoulant entre les températures initiale et finale choisies pour permettre la dénitration thermique en phase solide du nitrate d'uranyle hydraté, est généralement compris entre 5 et 600 minutes, et, préférentiellement, compris entre 5 et 200 minutes.

La phase solide recueillie après le déroulement du procédé selon l'invention, qui est exclusivement constituée par de l'$UO_3$, se présente dans un état pulvérulent, offrant dans la très grande majorité des cas une surface spécifique B.E.T. au moins égale à 15 $m^2$ par gramme, surface spécifique qui a été déterminée au moyen de la méthode décrite par S. Brunauer, P.H. Emet et E. Teller, dans la publication «Adsorption of gases in multimolecular layers» (J. Am. CEHM. Soc. 60, 309 1938) et mise en œuvre selon la procédure décrite dans la norme AFNOR - NF-X 11 - 621-75-11, alors que le produit selon l'art antérieur dispose d'une surface spécifique de l'ordre de au plus 1 $m^2.g^{-1}$.

De plus, cette phase solide dispose d'une densité apparente généralement inférieure à 1,5, et, préférentiellement comprise entre 0,4 et 1,4 $g.cm^{-3}$, dont la détermination a été effectuée selon la méthode décrite dans la norme AFNOR NF-A 95-111 de 1977, alors que, selon l'art antérieur, la densité apparente est de l'ordre de 4 $g.cm^{-3}$.

En outre, cette phase solide dispose d'une très grande porosité exprimée par un volume poreux mesuré en $cm^3.g^{-1}$ des pores ayant un rayon au plus égal à 7,5 $\mu m$, porosité déterminée au moyen d'un porosimètre à mercure basé sur l'application de la Loi de Washburn (Broc. North Aca. Sci. US - 7,111 - 1972) et opérant à une pression au moins égale à 1.01.$10^5$ Pascals. Le volume poreux de la phase solide recueillie à l'issue du traitement thermique est compris entre 0,15 et 1 $cm^3.g^{-1}$ et, préférentiellement compris entre 0,2 et 0,7 $cm^3.g^{-1}$, alors que l'$UO_3$ obtenu par traitement thermique du nitrate d'uranyle hydraté selon les procédés de l'art antérieur, dispose généralement d'un volume poreux inférieur à 0,1 $cm^3.g^{-1}$, et souvent inférieur à 0,05 $cm^3.g^{-1}$.

Enfin, la phase solide recueillie à l'issue de l'application du procédé selon l'invention offre une distribution bimodale des volumes des pores en fonction de leurs rayons qui ont été mesurés au moyen du même porosimètre à mercure, le premier mode se situant entre 8 et 40 nanomètres, et le second, entre 500 et 5000 nanomètres.

Après réduction de l'$UO_3$ en $UO_2$, par exemple par de l'hydrogène, l'oxyde ainsi réduit possède une très forte réactivité à l'égard de l'acide fluorhydrique utilisé dans l'étape ultérieure de fluoruration.

Le procédé selon l'invention est généralement mis en œuvre dans des réacteurs de type connu, tels que les réacteurs à plateaux, les fours tubulaires à circulation de produit, les lits fixes ou mobiles, qui peuvent être utilisés seuls ou associés.

Le procédé selon l'invention est conduit d'une manière continue ou discontinue. Dans ce dernier cas, le procédé utilise un ou plusieurs réacteurs en série. Lorsque plusieurs réacteurs sont mis en œuvre, ils peuvent être de même types ou de types différents.

Que le procédé de l'invention soit pratiqué d'une manière continue ou discontinue, les effluents gazeux sont évacués au fur et à mesure de leur formation, puis sont traités par les procédés connus en vue de régénérer $HNO_3$ et de le recycler à l'attaque des concentrés uranifères, ou bien de les réduire catalytiquement d'une manière telle que décrite dans le brevet français 2 370 695, qui consiste à transformer les oxydes d'azote produits en azote et vapeur d'eau, le dégagement de chaleur fourni étant utilisé pour la transformation du nitrate d'uranyle en trioxyde d'uranium.

Comme l'$UO_3$ produit se trouve sous une forme pulvérulente, il en est de même de l'$UO_2$ résultant de la réduction du trioxyde d'uranium. L'$UO_2$ peut être alors soumis à des opérations de frittage et être utilisé ultérieurement sous cette forme.

L'invention sera mieux comprise grâce à l'illustration qui en est faite au moyen des exemples ci-après:

Exemple 1

Cet exemple, qui illustre le procédé selon l'invention, concerne la décomposition du nitrate d'uranyle trihydraté, dont le point de fusion est de 113°C.

Pour ce faire, on a introduit 44 grammes de cristaux dudit nitrate d'uranyle dans un pilote de laboratoire constitué par un réacteur tournant d'une capacité de un litre placé dans un bain thermostaté muni d'une programmation de température.

Ledit réacteur était relié à un dispositif permettant d'abaisser la pression, ce dispositif étant

lui-même muni d'un régulateur de pression. On établissait alors à l'intérieur dudit réacteur une pression résiduaire de 3,3 kPa (25 millimètres de mercure).

La température initiale du bain était fixée à 110°C. Puis, la température de ce bain était portée progressivement à 330°C en 90 minutes et maintenue à cette température pendant une durée identique. La durée totale du traitement était alors de 180 minutes.

Pendant ce temps, la pression partielle de vapeur d'eau évoluait entre 3,3 et 0 kPa (25 et 0 millimètre de mercure). Les effluents gazeux, provenant du réacteur, étaient piégés par refroidissement. On recueillait alors 29 g d'un produit pulvérulent, de couleur rouille, qui était constitué par de l'$UO_3$ présentant une surface spécifique de 22,9 $m^2.g^{-1}$ et un volume poreux, relatifs aux pores de rayon au plus égal à 7,5 µm, qui était de 0,28 $cm^3.g^{-1}$, et dont la distribution des volumes des pores était bimodale, l'un des modes se situant entre 10 et 15 nanomètres et l'autre mode se situant entre 2000 et 2500 nanomètres, tandis que sa densité apparente était de 0,7 $g.cm^{-3}$.

L'analyse des caractéristiques physiques de l'$UO_3$ obtenu selon le procédé de l'invention le distingue des produits obtenus selon les procédés de dénitration de l'art antérieur, ses caractéristiques étant toujours beaucoup plus favorables à la réalisation des traitements ultérieurs de transformation tels que: réduction, fluoruration et frittage, en particulier en ce qui concerne la cinétique de transformation qui est très améliorée.

Exemple 2

Cet exemple concerne la décomposition du nitrate d'uranyle hexahydraté qui, pour illustrer la large application du procédé selon l'invention, a été conduite en deux étapes.

Pour ce faire, on a introduit 39,2 g de cristaux dudit nitrate d'uranyle hexahydraté dans un premier réacteur rotatif, identique à celui qui a été utilisé dans l'exemple 1.

Ce réacteur, muni d'une programmation de température, était relié à un dispositif permettant d'abaisser la pression, ce dispositif étant lui-même muni d'un régulateur de pression. On établissait à l'intérieur de ce réacteur une pression résiduaire de 3,3 kPa (25 millimètres de mercure).

La température initiale du bain était fixée à 50°C. Puis, cette température était portée progressivement à 230°C en 75 minutes. A cette température, le produit obtenu était devenu infusible.

Le produit infusible obtenu était alors transféré dans un réacteur à lit fixe de diamètre interne de 27 millimètres, qui travaillait à pression atmosphérique. Ce réacteur était chauffé par «effet Joule» et était parcouru par un courant d'air sec ayant un débit de 60 litres à l'heure. La température était alors portée de 230°C à 500°C en 60 minutes. Le temps total de dénitration était 135 minutes.

Au cours des deux étapes, la pression partielle d'eau évoluait de 3,3 à 0 kPa (25 à 0 millimètre de mercure). On recueillait alors 22,3 g d'un produit pulvérulent verdâtre qui était de l'$UO_3$. Cet $UO_3$ disposait d'une surface spécifique de 23,2 $m^2.g^{-1}$ d'un volume poreux (relatif aux pores de rayon au plus égal à 7,5 µm, qui était de 0,23 $cm^3.g^{-1}$ et dont la distribution bimodale des volumes de pores en fonction des rayons présentait deux maxima dont le premier se situait entre 10 et 12,5 nanomètres et le deuxième entre 1000 et 1250 nanomètres, tandis que sa densité apparente était de 1,24 $g.cm^{-3}$.

Exemple 3

Cet exemple illustre le décomposition de nitrate d'uranyle hexahydraté dans un réacteur unique et en une seule étape.

On a introduit 47,3 grammes de cristaux dudit nitrate dans le pilote de laboratoire décrit dans l'exemple 1. On établissait à l'intérieur dudit pilote une pression résiduaire de 3,3 kPa (25 millimètres de mercure).

La température initiale du bain thermostaté, muni d'une programmation de température, était de 50°C. Puis, la température de ce bain était progressivement portée à 350°C en 150 minutes, et maintenue à ce niveau pendant 45 minutes.

Pendant que se déroulait cette décomposition, la pression partielle de vapeur d'eau évoluait de 3,3 à 0 kPa (25 à 0 millimètre de mercure). Au terme de cette décomposition, on recueillait 27,9 g d'$UO_3$ pulvérulent, de couleur rouille. Cet $UO_3$ disposait d'une surface spécifique de 22,9 $m^2.g^{-1}$ d'un volume poreux (relatif aux pores de rayon au plus égal à 7,5 µm), qui était de 0,31 $cm^3.g^{-1}$ et dont la distribution bimodale des volumes de pores en fonction des rayons présentait deux maxima dont le premier se situait entre 12,5 et 16,0 et le deuxième entre 1000 et 1250 nanomètres, tandis que la densité apparente était de 1,33 $g.cm^{-3}$.

Exemple 4

Cet exemple illustre la décomposition du nitrate d'uranyle hexahydraté en une étape, dans un réacteur rotatif dans lequel la dénitration est achevée très rapidement, dès lors que le produit en cours de décomposition devient infusible. Dans ce but, on a introduit 49,7 grammes du nitrate d'uranyle hexahydraté se présentant sous une forme écaillée dans le pilote de laboratoire décrit dans le premier exemple.

On établissait à l'intérieur du réacteur dudit pilote une pression résiduaire de 3,3 kPa (25 millimètres de mercure). La température initiale du bain thermostaté, muni d'une programmation de température, était de 50°C. Puis, la température de ce bain était portée progressivement à 230°C en 80 minutes, température pour laquelle le produit résultant n'était plus fusible. Il était alors porté brutalement à la température de 340°C en 10 minutes et maintenu à ce niveau pendant 60 minutes. Pendant le déroulement du traitement, c'est-à-dire pendant 150 minutes, la pression résiduaire du réacteur était maintenue à 3,3 kPa (25 millimètres de mercure). Pendant ce temps, la pression partielle de vapeur d'eau évoluait de 3,3

à 0 kPa (25 à 0 millimètres de mercure). On recueillait alors 28,3 grammes d'un produit écaillé, de couleur rouille, qui était de l'$UO_3$ amorphe. Cet $UO_3$ disposait d'une surface spécifique de 21,6 $m^2.g^{-1}$ d'un volume poreux (relatif aux pores de rayon au plus égal à 7,5 microns), qui était de 0,27 $cm^3.g^{-1}$, et dont la distribution bimodale des volumes de pores, en fonction des rayons, présentait deux maxima dont le premier se situait entre 12,5 et 15,0 nanomètres et le deuxième entre 2000 et 2500 nanomètres.

Dans tous les exemples, y compris ceux où une seule étape a été utilisée, la vitesse de montée en température au cours de la première étape, ou au cours de la période correspondant à cette première étape, est comprise entre 2°C/min et 2,4°C/min.

**Revendications**

1. Procédé d'obtention de trioxyde d'uranium de grande réactivité par dénitration thermique de nitrate d'uranyle hydrate de formule $UO_2 (NO_3)_2$ $xH_2O$ dans laquelle $2 \leq x \leq 6$, somis sous sa forme solide à un traitement thermique consistant à le porter d'une température initiale inférieure à sa température de fusion, jusqu'à une température finale comprise entre 260°C et 600°C, en conduisant le traitement d'une manière telle que la température du produit à chaque instant soit toujours inférieure à la température de fusion correspondant à sa composition instantanée, caractérisé en ce que la pression partielle de vapeur d'eau dans l'enceinte de traitement est au plus égale à 8,7 kPa (65 mm de Hg), en ce que la montée en température est progressive et continue, et que le traitement est effectué dans un appareil à circulation continue de produit.

2. Procédé selon la revendication 1, caractérisé en ce que la pression partielle de vapeur d'eau dans l'enceinte de traitement est au plus égale à 5,3 kPa (40 mm Hg mercure).

3. Procédé selon l'une quelconque des revendications 1 ou 2, caractérisé en ce que le traitement thermique est effectué sous une pression totale au plus égale à la pression atmosphérique.

4. Procédé selon l'une quelconque des revendications 1 à 3, caractérisé en ce que le produit est porté de la température initiale à la température finale en un temps compris entre 5 et 200 minutes.

5. Procédé selon l'une quelconque des revendications 1 à 4, caractérisé en ce que, dès que la phase solide est devenue infusible, on porte ledit produit infusible, au cours d'une dite deuxième étape, à la température finale avec une vitesse de montée en température comprise entre 4°C/min et 800°C/min.

6. Procédé selon l'une quelconque des revendications 1 à 4, caractérisé en ce que, tant que le produit n'est pas devenu infusible, la vitesse de montée en température est comprise entre 2°C/min et 2,4°C/min.

7. Trioxyde d'uranium de très grande réactivité résultant de la dénitration thermique de nitrate d'uranyle hydraté de formule $UO_2(NO_3)_2$, $xH_2O$, selon l'une quelconque des revendications 1 à 6, caractérisé en ce qu'il dispose d'une densité apparente inférieure à 1,5, et préférentiellement comprise entre 0,4 et 1,4.

8. Trioxyde d'uranium de très grande réactivité résultant de la dénitration thermique de nitrate d'uranyle hydraté de forme $UO_2(NO_3)_2$, $xH_2O$, selon l'une quelconque des revendications 1 à 6, caractérisé en ce qu'il dispose d'un volume de pores de rayon inférieur à 7,5 µm compris entre 0,15 et 1,0 $cm^3.g^{-1}$ et, préférentiellement compris entre 0,2 et 0,7 $cm^3.g^{-1}$.

9. Trioxyde d'uranium de très grande réactivité résultant de la dénitration thermique de nitrate d'uranyle hydraté de formule $UO_2(NO_3)_2$ $xH_2O$ selon l'une quelconque des revendications 1 à 6, caractérisé en ce qu'il dispose d'une distribution bimodale du volume des pores.

10. Trioxyde d'uranium de très grande réactivité résultant de la dénitration thermique de nitrate d'uranyle hydraté de formule $UO_2(NO_3)_2$, $xH_2O$, selon la revendication 9, caractérisé en ce que le premier mode de la distribution du volume des pores en fonction de leur rayon se situe entre 8 et 40 nanomètres et le deuxième mode entre 500 et 5000 nanomètres.

**Claims**

1. A process for producing uranium trioxide of high reactivity by thermal denitration of hydrated uranyl nitrate having the formula $UO_2(NO_3)_2$, $xH_2O$, in which $2 \leq x \leq 6$, said uranyl nitrate being subjected in its solid form to a thermal treatment comprising raising it from an initial temperature which is still lower than its melting temperature to a final temperature comprised between 260°C and 600°C, the treatment being carried out in such a way that the temperature of the product at any time is always lower than the melting temperature corresponding to its instantaneous composition characterised in that the steam partial pressure in the treatment chamber is at most equal to 8.7 kPa (65 millimetres of mercury), that the temperature rise is progressive and continuous and that the treatment is carried out in a continuously product-circulating apparatus.

2. A process according to claim 1, characterised in that the steam partial pressure in the treatment chamber is at most equal to 5.3 kPa (40 mm of mercury).

3. A process according to any one of claims 1 to 2, characterised in that the thermal denitration treatment is carried out under a total pressure which is at most atmospheric pressure.

4. A process according to any one of claims 1 to 3, characterised in that the product is heated from the initial to a final temperature in a period of time required comprised between 5 and 200 minutes.

5. A process according to any one of claims 1 to 4, characterised in that, as soon as the solid phase becomes infusible, said infusible product, during a said second step, is raised to the final

temperature with a rate of temperature rise comprised between 4°C to 800°C per minute.

6. A process according to any one of claim 1 to 4, characterised in that, till the product became infusible, the rate of the temperature rise is comprised between 2°C/min and 2,4°C/min.

7. Uranium trioxide having a very high degree of reactivity, resulting from the thermal denitration of hydrated uranyl nitrate having the formula $UO_2(NO_3)_2$, $xH_2O$, according to any one of claims 1 to 6, characterised in that it has an apparent density lower than 1.5 and preferably between 0.4 and 1.4 $g.cm^{-3}$.

8. Uranium trioxide having a very high degree of reactivity, resulting from the thermal denitration of hydrated uranyl nitrate having the formula $UO_2(NO_3)_2$, $xH_2O$, according to any one of claims 1 to 6, characterised in that it has a volume of pores with a radius of less than 7.5 microns, that is between 0.15 and 1.0 $cm^3.g^{-1}$ and preferably between 0.2 and 0.7 $cm^3.g^{-1}$.

9. Uranium trioxide having a very high degree of reactivity, resulting from the thermal denitration of hydrated uranyl nitrate having the formula $UO_2(NO_3)_2$, $xH_2O$, according to anyone of claims 1 to 6, characterised in that it has a bimodal distribution of the volume of pores.

10. Uranium trioxide having a very high degree of reactivity, resulting from the thermal denitration of hydrated uranyl nitrate having the formula $UO_2(NO_3)_2$, $xH_2O$, according to claim 9, characterised in that the first mode of distribution of the volume of pores, independence on the radius thereof, occurs between 8 and 40 nanometers and the second mode occurs between 500 and 5000 nanometers.

**Patentansprüche**

1. Verfahren zur Herstellung von Urantrioxid hoher Reaktivität durch thermische Denitrierung von Uranlynitrathydrat der Formel $UO_2$ $(NO_3)_2$ $xH_2O$, in der $2 \leqq x \leqq 6$, das in fester Form einer Wärmebehandlung unterworfen wird, die darin besteht, es von einer Anfangstemperatur unter seinem Schmelzpunkt bis auf eine Endtemperatur im Bereich von 260°C bis 600°C zu bringen, indem man die Behandlung derart durchführt, dass die Temperatur des Erzeugnisses in jedem Augenblick stets unter dem seiner augenblicklichen Zusammensetzung entsprechenden Schmelzpunkt ist, dadurch gekennzeichnet, dass der Wasserdampf-Partialdruck im Behandlungsgefäss höchstens gleich 8,7 kPa (65 mm Hg) ist, dass der Temperaturanstieg fortschreitend und stetig ist und dass die Behandlung in einer Vorrichtung mit ständiger Erzeugniszirkulation vorgenommen wird.

2. Verfahren nach Anspruch 1, dadurch gekennzeichnet, dass der Wasserdampf-Partialdruck im Behandlungsgefäss höchstens gleich 5,3 kPa (40 mm Hg Quecksilber) ist.

3. Verfahren nach irgendeinem der Ansprüche 1 oder 2, dadurch gekennzeichnet, dass die Wärmebehandlung bei einem Gesamtdruck von höchstens gleich dem atmosphärischen Druck vorgenommen wird.

4. Verfahren nach irgendeinem der Ansprüche 1 bis 3, dadurch gekennzeichnet, dass das Erzeugnis von der Anfangstemperatur in einer Zeit im Bereich von 5 bis 200 Minuten auf die Endtemperatur gebracht wird.

5. Verfahren nach irgendeinem der Ansprüche 1 bis 4, dadurch gekennzeichnet, dass man, sobald die feste Phase unschmelzbar geworden ist, das unschmelzbare Erzeugnis im Lauf einer sogenannten zweiten Stufe mit einer Temperaturanstiegsgeschwindigkeit im Bereich von 4°C/min bis 800°C/min auf die Endtemperatur bringt.

6. Verfahren nach irgendeinem der Ansprüche 1 bis 4, dadurch gekennzeichnet, dass, solange das Erzeugnis nicht unschmelzbar geworden ist, die Temperaturanstiegsgeschwindigkeit im Bereich von 2°C/min bis 2,4°C/min ist.

7. Urantrioxid sehr hoher Reaktivität, das durch die thermische Denitrierung von Uranylnitrathydrat der Formel $UO_2$ $(NO_3)_2$, $xH_2O$ nach irgendeinem der Ansprüche 1 bis 6 erzeugt ist, dadurch gekennzeichnet, dass es eine Schüttdichte unter 1,5 und vorzugsweise im Bereich von 0,4 bis 1,4 aufweist.

8. Urantrioxid sehr hoher Reaktivität, das durch die thermische Denitrierung von Uranylnitrathydrat der Formel $UO_2$ $(NO_3)_2$, $xH_2O$ nach irgendeinem der Ansprüche 1 bis 6 erzeugt ist, dadurch gekennzeichnet, dass es ein Volumen von Poren eines Radius' unter 7,5 µm im Bereich von 0,15 bis 1,0 $cm^3.g^{-1}$ und vorzugsweise im Bereich von 0,2 bis 0,7 $cm^3.g^{-1}$ aufweist.

9. Urantrioxid sehr hoher Reaktivität, das durch die thermische Denitrierung von Uranylnitrathydrat der Formel $UO_2$ $(NO_3)_2$ $xH_2O$ nach irgendeinem der Ansprüche 1 bis 6 erzeugt ist, dadurch gekennzeichnet, dass es eine zweigipflige Verteilung des Volumens der Poren aufweist.

10. Urantrioxid sehr hoher Reaktivität, das durch die thermische Denitrierung von Uranylnitrathydrat der Formel $UO_2$ $(NO_3)_2$, $xH_2O$ erzeugt ist, nach Anspruch 9, dadurch gekennzeichnet, dass der erste Gipfel der Verteilung des Volumens der Poren als Funktion ihres Radius zwischen 8 und 40 nm und der zweite Gipfel zwischen 500 und 5000 nm liegt.